(19) Europäisches Patentamt
European Patent Office
Office européen des brevets

(11) Publication number: **0 240 625 A1**

(12) **EUROPEAN PATENT APPLICATION**

(21) Application number: **86302547.4**

(22) Date of filing: **07.04.86**

(51) Int. Cl.⁴: **F16D 55/224**, F16D 55/22, B60T 11/18

(43) Date of publication of application: **14.10.87 Bulletin 87/42**

(84) Designated Contracting States: **DE FR GB IT**

(71) Applicant: **TOKICO LTD.**
**6-3, Fujimi, 1-Chome Kawasaki-Ku**
**Kawasaki-shi Kanagawa-ken(JP)**

(72) Inventor: **Kobayashi, Kinzo**
**Minamidai 1-3-901, Nagata Minami-ku**
**Yokohama-shi Kanagawa-ken(JP)**
Inventor: **Nakayama, Shinichi**
**3-12-9, Nishishinagawa**
**Shinagawa-ku Tokyo(JP)**

(74) Representative: **Spall, Christopher John et al**
**BARKER, BRETTELL & DUNCAN 138 Hagley Road**
**Edgbaston Birmingham B16 9PW(GB)**

(54) **Disc brake.**

(57) A disc brake of floating caliper type including a stationary member (2), a caliper (3) slidably mounted on the stationary member and straddling a rotatable disc (2), a pair of friction pads (12, 12') disposed on opposite sides of the disc, a hydraulic cylinder and piston device (4, 5) incorporated in the caliper for applying one of the friction pads against one side of the disc and for applying the other friction pad against the other side of the disc through the caliper, and liquid passage (22) for connecting the hydraulic cylinder and piston device to a source of pressurised fluid. A check valve (25, 26) is provided in the liquid passage for permitting the liquid flow toward the cylinder and piston device and preventing the liquid flow in the opposite direction, and a throttling passage (29) is provided to by-pass the check valve and to permit a restricted liquid flow in the liquid passage in both directions, whereby inexpedient displacement of the caliper caused by a foreign article can be prevented.

Fig. I

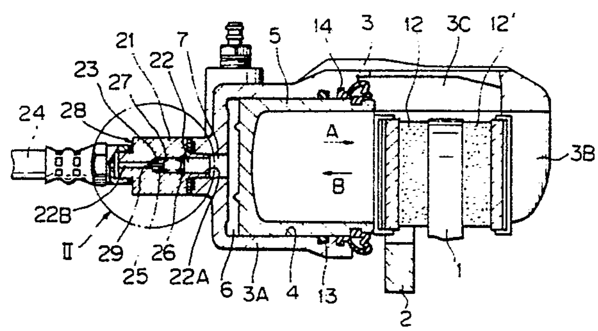


EP 0 240 625 A1

# DISC BRAKE

This invention relates to a disc brake for use in a hydraulic braking system of a vehicle and, particularly to a disc brake of so-called floating caliper type.

The floating caliper type disc brake typically comprises a stationary member, a caliper straddling a part of the outer circumference of a rotatable disc and being slidable on the stationary member in the direction parallel to the axis of the disc, a pair of friction pads disposed on opposite sides of the disc, a cylinder formed in the caliper, and a piston slidable in the cylinder to apply one of the friction pads against one side of the disc, whereby the reaction force on the piston displaces the caliper in the opposite direction to apply the other friction pad against the other side of the disc.

Fig. 6 shows a typical prior art floating caliper type disc brake, wherein a stationary member 2 is mounted on a non-rotatable part of a vehicle (not shown) at one side (left side in the drawing) of a rotatable disc 1. A caliper 3 consisting of an inner leg portion 3A, an outer leg portion 3C and a bridge portion 3B is mounted on the stationary member 2 to slide in the direction parallel to the axis of the disc 1 (transverce direction in the drawing), and a cylinder 4 is formed in the inner leg portion 3A. A piston 5 is slidably fitted in the cylinder 4, and a pressure chamber 6 is defined in the cylinder 4 by the piston 5. A hydraulic pressure inlet port 7 is formed in the inner leg portion 3A to open in the pressure chamber 6. A connecting member 8 is fixedly mounted on the inlet port 7 and is connected to a source of hydraulic pressure such as a master cylinder (no shown) through a piping 9. An oil passage 8A is formed in the connecting member 8 with one end communicating to the piping 9 and the other end communicating to the inlet port 7. Shown at 10 and 11 are seal members.

A pair of friction pads 12 and 12′ are disposed on opposite sides of the disc 1. When liquid under pressure is supplied to the pressure chamber 6, the piston 5 is displaced in arrow A direction in the drawing and presses the friction pad 12 against one side (left side) of the disc 1. The reaction force of the piston 5 acts on the bottom of the cylinder 4 to displace the caliper 3 in arrow B direction, whereby the friction pad 12′ is pressed against the other side (right side) of the disc 1. Shown at 13 is a resilient seal ring for preventing the leakage between the cylinder 4 and the piston 5 and for biasing the piston 5 in arrow B direction when the hydraulic pressure in the pressure chamber 6 is released. Shwon at 14 is a dust preventing seal.

In the prior art floating caliper type disc brake, the caliper 3 is slidably mounted on the stationary member 2 in arrows A and B directions, thus, there is a shortcoming such that when the vehicle is running on a snowed road a mass of snow may sometimes bump on the caliper 3 to displace shockingly the caliper 3 in arrow A direction, whereby, since the movement of the piston 5 is restricted by the disc 1 through the friction pad 12 the piston 5 may be excessively pushed into the cylinder 4 thereby generating so-called over-return phenomenon of the piston. Further, in such case, the liquid in the pressure chamber 6 is exhausted to a reservoir through the inlet port 7, the connecting member 8 and the piping 9 by a large amount, which requires a supply of pressurized liquid into the pressure chamber 6 by a large amount in applying brakes thereby preventing normal brake applying operation.

The present invention aims to overcome aforsaid shortcoming and, according to the invention, there is provided a disc brake of the type including a stationary member, a caliper slidably mounted on the stationary member and straddling a rotatable disc, a pair of friction pads disposed on opposite sides of the disc, a hydraulic cylinder and piston device incorporated in the caliper for applying one of friction pads against one side of the disc and for applying the other friction pad against the other side of the disc through the caliper, and a liquid passage for connecting the cylinder and piston device with a source of hydraulic pressure, wherein a check valve is provided in the liquid passage for permitting the liquid flow toward the cylinder and piston device and preventing the liquid flow in the opposite direction, and a throttling passage is provided to by-pass the check valve and to permit a restricted liquid flow in both directions.

According to the invention the over-return phenomenon of the piston can effectively prevented by a simple construction.

Further objects and advantages of the invention will become apparent from the following description with reference to some preferred embodiments exemplified in attached drawings, in which ;

Fig. 1 is a longitudinal sectional view of a disc brake according to the invention;

Fig. 2 is an enlarged view of a portion II in Fig. 1;

Fig. 3 is a sectional view similar to Fig. 2 but showing a valve open condition;

Fig. 4 is a graph showing the relationship between the return speed of the piston and the amount of oil discharging from the pressure chamber;

Fig. 5 is a sectional view similar to Fig. 2 but showing a modified check valve according to a second embodiment of the invention, and

Fig. 6 is a longitudinal sectional view of prior art floating caliper type disc brake.

The disc brake shown in Fig. 1 is generally similar to the disc brake shwon in Fig. 6 and, accordingly, the same reference numerals are applied to corresponding parts and detailed description therefor is omitted.

In Fig. 1, a valve casing 21 is screw-threadingly connected to the caliper 3 to substitute the connecting member 8 in the prior art disc brake. An axial passage 22 including a large diameter bore 22A and a small diameter bore 22B is formed in the valve casing 21, and a truncated conical valve seat 23 is formed between the large diameter bore 22A and the small diameter bore 22B. The valve casing 21 is connected to a piping 24 which is connected to a master cylinder (not shown) acting as a source of hydraulic pressure. Thus, the passage 22 and the piping 24 constitute a liquid passage connecting the source of hydraulic pressure to the pressure chamber 6. A generally cylindrical valve member 25 is slidably fitted in the large diameter bore 22A of the passage 22, and is adapted to engage with the valve seat 23 thereby closing the passage 22. A split retaining ring 26 is fitted in an annular groove formed in the large diameter bore 22A, and a coil spring 27 is disposed between the retaining ring 26 and the valve member 25 to bias the valve member 25 against the valve seat 23. Thus, the valve casing 21, the valve seat 23, the valve member 25 and the spring 27 constitute a check valve according to the invention for permitting liquid flow in the direction toward the pressure chamber 6.

Shown at 29 in Fig. 1 is a throttling passage axially extending through the central portion of the valve member 25. The passage 29 has the effective passage area substantially smaller than that of the small diameter bore 22B and communicates permanently the opposite sides of the valve member 25. In other words, the throttling passage 29 by-passes the check valve and permits a restricted liquid flow in opposite directions. Shown at 30 and 31 in Fig. 1 are seal members.

In operation, when a driver of the vehicle applies brakes by such as depressing a brake pedal (not shown), hydraulic liquid under pressure is supplied from such as a master cylinder through the piping 24 to the small diameter bore 22B in the valve casing 21, displaces the valve member 25 against the spring force of the spring 27, and opens the check valve as shown in Fig. 3. The liquid under pressure is supplied to the pressure chamber 6 through passages 25B in the outer circumference of the valve member 25 and the large diameter bore 22A. The piston 5 displaces in arrow A direction to press the friction pad 12 against one side of the disc 1, and the reaction force of the piston 5 displaces the caliper 3 in arrow A direction, and the friction pad 12′ is pressed against the other side (the right side) in Fig. 1 of the disc 1.

In releasing the brake applying operation, the piston 5 displaces in arrow B direction by the resilient force of the resilient seal member 13 at a relatively slow speed. The valve member 25 is returned to the valve closing position (Fig. 2), thus, the liquid in the pressure chamber 6 returns to a reservoir through a large diameter bore 22A in the valve casing 21, the throttling passage 29 in the valve member 25, the small diameter bore 22B in the valve casing 21 and the piping 24. The friction pads 12 and 12′ seperate from the disc 1 similarly to prior art disc brakes.

The liquid discharged from the pressure chamber 6 through the throttling passage 29 receives a resistance force in passing through the throttling passage 29, thus, there is a predetermined relationship, as shown in Fig. 4, between return speed Vp of the piston 5 and the amount of liquid discharged from the pressure chamber 6. In releasing brakes, the return speed Vp of the piston 5 is relatively low corresponding to hatched area portion E in Fig. 4, thus, the liquid flow in the passage 29 is relatively large. Accordingly, the liquid in the chamber 6 is discharged into the master cylinder smoothly and effectively, and the braking force is released smoothly.

While, when the vehicle is running on such as a snowed road, a foreign article such as a mass of snow may sometimes bump against the caliper 3 to shockingly displace the caliper 3 in arrow A direction, The movement of the piston 5 in arrow A direction is restricted by the disc 1 through the friction pad 12, thus, the piston 5 receives an impact force in arrow B direction which tends to push the piston 5 into the cylinder 4. The liquid in the pressure chamber 6 is discharged only through the throttling passage 29 which generates a large resisting force, as shown in hatched area portion F in Fig. 4, namely, the amount of liquid discharging from the pressure chamber 6 is restricted to a small amount. Accordingly, it is possible to prevent over-return phenomenon of the piston, and the amount of liquid remaining in the pressure chamber 6 does not excessively reduce which enables to prevent excessive amount of depression of the brake pedal during the following brake applying operation.

## Claims

1. A disc brake including a stationary member, a caliper slidably mounted on the stationary member and straddling a rotatable disc, a pair of friction pads disposed on opposite sides of the disc, a hydraulic cylinder and piston device incorporated in the caliper for applying one of the friction pads against one side of the disc and for applying the other friction pad against the other side of the disc through the caliper, and a liquid passage for connecting the hydraulic cylinder and piston device to a source of pressurized fluid, wherein a check valve is provided in the liquid passage for permitting the liquid flow toward the cylinder and piston device and preventing the liquid flow in the opposite direction, and a throttling passage is provided to by-pass the check valve and to permit a restricted liquid flow in the liquid passage in both directions.

2. A disc brake according to claim 1, wherein said check valve comprises a valve casing mounted on the caliper, a valve seat formed in the valve casing, a valve member received in the valve casing and cooperating with the valve seat, and a spring viasing the valve member against the valve seat, and said throttling passage extends axially through the valve member.

3. A disc brake according to claim 1, wherein said check valve comprises a valve casing mounted on the caliper, a valve seat formed in the valve casing, a valve member received in the valve casing and cooperating with the valve seat, and a spring biasing the valve member against the valve seat, and said throttling passage is on or more grooves formed in the valve seat.

Fig. 1

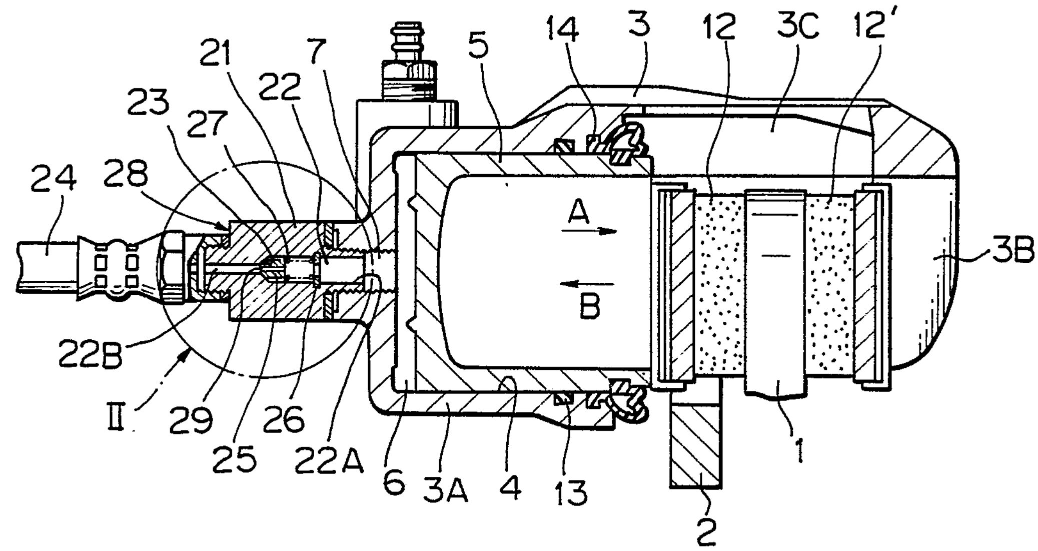


Fig. 2

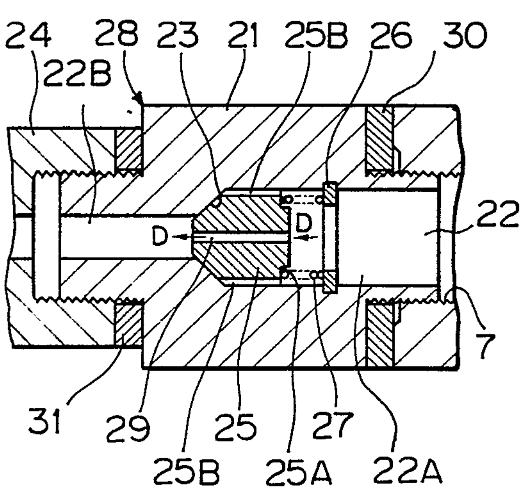


Fig. 3

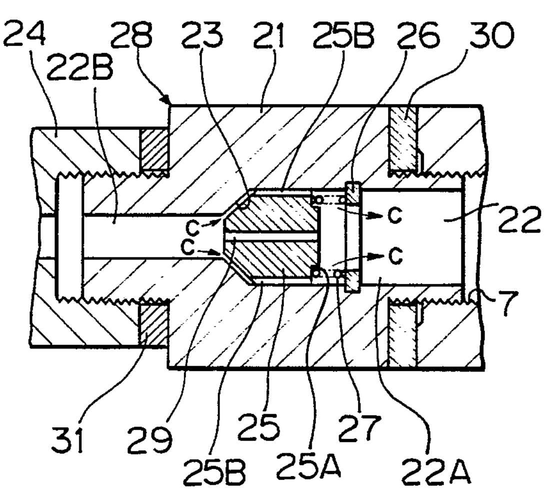

Fig. 4

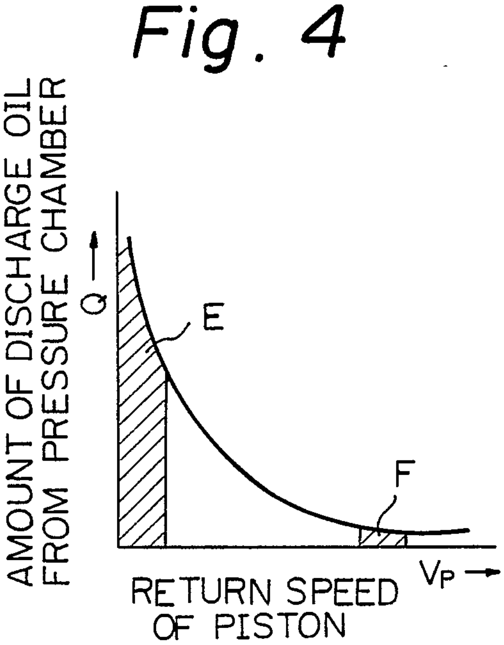


Fig. 5

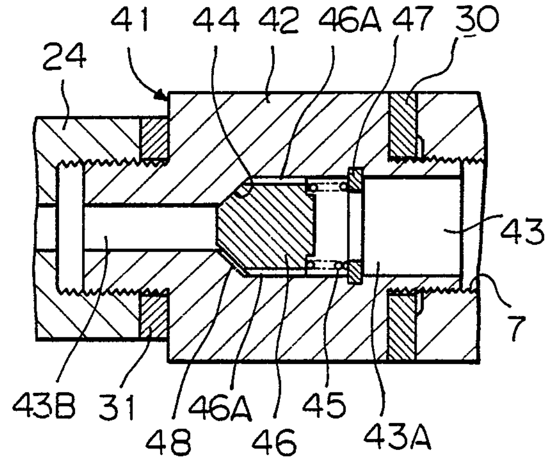


Fig. 6

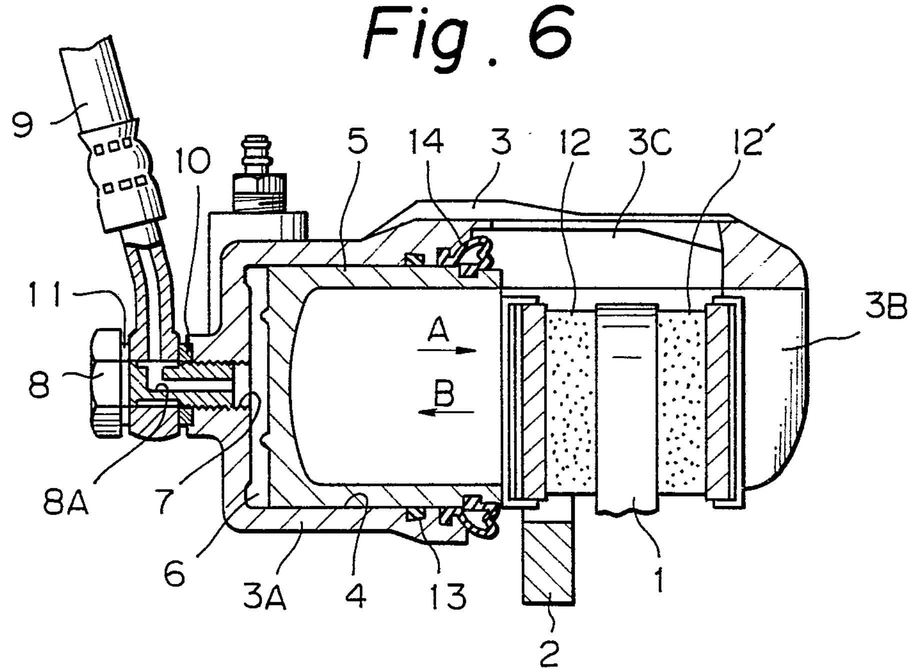

European Patent Office

# EUROPEAN SEARCH REPORT

Application number

EP 86 30 2547

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | GB-A-1 424 100 (GENERAL MOTORS CORP.)<br>* Page 2, lines 61-65; figure 10 *<br>--- | 1 | F 16 D 55/224<br>F 16 D 55/22<br>B 60 T 11/18 |
| Y | PATENTS ABSTRACTS OF JAPAN, vol. 9, no. 264 (M-423)[1987], 22nd October 1985; & JP-A-60 110 556 (AKEBONO BRAKE KOGYO K.K.) 17-06-1985<br>--- | 1 | |
| A | US-A-3 993 171 (TONN)<br>--- | | |
| A | GB-A-1 239 040 (SA FRANCAISE DU FERODO)<br>--- | | TECHNICAL FIELDS SEARCHED (Int. Cl.4) |
| A | GB-A- 819 222 (THE GOODYEAR TIRE & RUBBER CO.)<br>--- | | F 16 D 55/00<br>F 16 D 65/00<br>B 60 T 11/00 |
| A | DE-A-2 851 506 (MAGIRUS-DEUTZ AG)<br>--- | | |
| A | DE-C- 738 443 (ALFRED TEVES MASCHINEN- UND ARMATURENFABRIK KOMM.-GES.)<br>--- | | |
| A | FR-A-1 066 263 (GIRLING LTD.)<br>--- -/- | | |

The present search report has been drawn up for all claims

| Place of search | Date of completion of the search | Examiner |
|---|---|---|
| THE HAGUE | 04-12-1986 | BRAEMS C.G.I. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

European Patent Office

# EUROPEAN SEARCH REPORT

Application number

EP 86 30 2547



## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | DE-C- 726 761 (ALFRED TEVES MASCHINEN- UND ARMATURENFABRIK GmbH)<br>--- | | |
| A | EP-A-0 069 658 (SA D.B.A.)<br>--- | | |
| A | FR-A-1 261 246 (FIAT)<br>----- | | |
| | | | TECHNICAL FIELDS SEARCHED (Int. Cl.4) |

The present search report has been drawn up for all claims

| Place of search | Date of completion of the search | Examiner |
|---|---|---|
| THE HAGUE | 04-12-1986 | BRAEMS C.G.I. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82